Europäisches Patentamt

European Patent Office

Office européen des brevets

(19)

(11) Veröffentlichungsnummer : **0 081 645**
**B1**

(12) **EUROPÄISCHE PATENTSCHRIFT**

(45) Veröffentlichungstag der Patentschrift :
18.09.85

(21) Anmeldenummer : **82109378.8**

(22) Anmeldetag : **11.10.82**

(51) Int. Cl.⁴ : **C 09 K   5/00**

(54) Verfahren zum Abkühlen von Werkstücken.

(30) Priorität : **05.12.81 DE 3148275**

(43) Veröffentlichungstag der Anmeldung :
**22.06.83 Patentblatt 83/25**

(45) Bekanntmachung des Hinweises auf die Patenterteilung : **18.09.85 Patentblatt 85/38**

(84) Benannte Vertragsstaaten :
**AT BE CH FR GB IT LI NL SE**

(56) Entgegenhaltungen :
**DE-A- 2 421 261**
**US-A- 3 393 152**
**US-A- 4 011 730**

(73) Patentinhaber : **MESSER GRIESHEIM GMBH**
**Hanauer Landstrasse 330**
**D-6000 Frankfurt/Main 1 (DE)**

(72) Erfinder : **Donnerhack, Andreas, Dr.**
**Bismarckstrasse 4**
**D-4150 Krefeld (DE)**
Erfinder : **Golke, Heinz**
**Am Kessel 48**
**D-4035 Breitscheid (DE)**
Erfinder : **Volker, Wolfgang**
**Pastorsbusch 35**
**D-4154 Tönisvorst 1 (DE)**

## Beschreibung

Die Erfindung betrifft ein Verfahren zum Abkühlen von Werkstücken durch direkten Wärmeaustausch mit einem tiefsiedenden verflüssigten Gas.

In der betrieblichen Praxis werden vielfach Werkstücke, insbesondere metallische Werkstücke, durch direkten Wärmeaustausch mit flüssigem Stickstoff abgekühlt. Die niedrige Kühlmitteltemperatur von − 196 °C gewährleistet neben einer tiefen Endtemperatur des Werkstückes zusätzlich relativ geringe Abkühlzeiten. Beispiele hierfür sind das Kaltschrumpfen und das Rohrfrosten. Beim Rohrfrosten wird die im Inneren eines Rohres befindliche Flüssigkeit an einer oder zwei Stellen vorübergehend eingefroren, die Rohrleitung also abgeschlossen, um an der Rohrleitung Reparaturen vornehmen zu können.

Bei kleinen Werkstücken stellen die reinen Abkühlzeiten keinen erheblichen wirtschaftlichen Faktor dar, weil, beispielsweise beim kaltschrumpfen, die Weiterverarbeitung der gekühlten Teile den zeitlichen Produktionsablauf limitiert, oder beispielsweise beim Rohrfrosten, die Kalthaltezeiten wesentlich größer sind als die Dauer des Abkühlvorganges. Bei größeren Werkstücken steigt jedoch die Kühldauer überproportional mit dem Volumen des Werkstückes an. Wegen der nicht beeinflußbaren Wärmeleitfähigkeit im Innern des Werkstückes ist dies zum Teil unvermeidbar. Eine Beschleunigung der Abkühlung kann höchstens erreicht werden durch eine Verbesserung des Wärmeüberganges zwischen der Oberfläche des Werkstückes und dem tiefsiedenden verflüssigten Gas.

Der Erfindung liegt daher die Aufgabe zugrunde, bei einem Verfahren zum Abkühlen von Werkstücken durch direkten Wärmeaustausch mit einem tiefsiedenden verflüssigten Gas die Abkühlzeit durch Verbesserung des Wärmeüberganges zwischen der Oberfläche des Werkstückes und dem tiefsiedenden verflüssigten Gas zu verringern.

Gemäß der Erfindung wird dies erreicht, indem dem tiefsiedenden verflüssigten Gas sich nicht verflüchtigende Feststoffe in Form mikroskopischer Partikel zugemischt werden, die aufgrund ihres spezifischen Gewichtes im verflüssigten Gas schweben oder zumindest durch die Turbulenzen im siedenden Gas in der Schwebe gehalten werden.

Bei Verwendung von Stickstoff als Kühlmittel hat sich Silicagel als der am besten geeignete zuzumischende Feststoff erwiesen.

Die Erfindung geht von der Überlegung aus, daß der Wärmeübergang zwischen der Oberfläche des Werkstückes und dem tiefsiedenden verflüssigten Gas verbessert werden kann, wenn der sich als Folge des Leydenfrost'schen Phänomens ausbildende Gasfilm zwischen Werkstück und Flüssigkeit gestört werden kann. Diese Störung wird durch die erfindungsgemäß zugemischten Feststoffe in Form mikroskopischer Partikel erreicht. Dem Stickstoff wird hierdurch der Zugang zur Werkstückoberfläche erleichtert und das Werkstück schneller abgekühlt. Bei ungestörtem Gasfilm entspricht der Wärmeübergangswert lediglich dem der Kombination kaltes Gas/Werkstück (Filmsieden). Bei erfindungsgemäß gestörtem Gasfilm ist der Wärmeübergangswert größer und nähert sich der Kombination flüssiges Gas/Werkstück (Blasensieden).

Das spezifische Gewicht der zuzumischenden Partikel sollte so bemessen sein, daß die Partikel entweder im tiefsiedenden verflüssigten Gas schweben oder zumindest durch die Turbulenzen im siedenden Gas weitgehend in der Schwebe gehalten werden und nicht sedimentieren. Dadurch wird gewährleistet, daß der beabsichtigte Effekt an der gesamten Oberfläche des Werkstückes wirksam wird. Die Partikel müssen darüber hinaus chemisch inert gegen die zu kühlenden Werkstoffe sein.

Aus der US-PS 3 393 152 ist ein Kühlmittel aus flüssigem Stickstoff und 5 bis 95 % festem Kohlendioxid bekannt. Hierbei erfolgt die Kühlung zunächst durch Stickstoff, ausschließlich bei höherem Temperaturniveau durch das sich verflüchtigende Kohlendioxid. Insbesondere bei höheren Kohlendioxidgehalten nimmt das Kühlmittel eine cremige Form an. Eine Störung des Gasfilms, soweit er sich überhaupt noch bildet, ist hierbei nicht möglich.

In der Praxis hat sich gezeigt, daß 2-7 Gew.% Feststoffpartikel ausreichen, um den gewünschten Effekt zu bewirken.

Als Feststoffpartikel sind feine Stäube, z. B. aus Kunststoff, geeignet. Für flüssigen Stickstoff, das gängigste Kühlmittel, haben sich Materialien auf $SiO_2$-Basis (reiner Seesand, Perlite und Silicagel) als am geeignetens erwiesen. Die besten Ergebnisse wurden mit einem unter der geschützten Bezeichnung «Aerosil 200» genannten Silicagel erreicht. Das erfindungsgemäße Zumischen dieser Materialien zu flüssigem Stickstoff bewirkte in allen Fällen eine Erhöhung des Wärmeübergangswertes gegenüber der Kühlung mit reinem flüssigen Stickstoff.

Eine Abhängigkeit dieser Erhöhung von Parametern wie Partikelgröße oder spezifischer Oberfläche konnte experimentell nicht bestimmt werden. Es ist jedoch anzunehmen, daß eine hohe spezifische Oberfläche in einem bestimmten Größenbereich den Effekt positiv beeinflußt.

Nachfolgend werden die Ergebnisse von Versuchen mit der bevorzugten Kombination flüssiger Stickstoff/Aerosil 200 beschrieben. In den Zeichnungen sind die Versuchsergebnisse in Form von Diagrammen dargestellt.

Es zeigen :

Figur 1  die Erhöhung der Verdampfungsrate von flüssigem Stickstoff durch die Zugabe von Aerosil 200 in verschiedenen Konzentrationen,

Figur 2  die gemessenen und berechneten Abkühlzeiten von Werkstücken aus VA-Stahl in unterschiedlichen Abmessungen,

Figur 3  die gemessenen und berechneten Abkühlzeiten von Aluminium-Teilen unterschiedlicher Abmessungen,

Figur 4 die Verkürzung der Abkühlzeiten von zylindrischen Körpern verschiedener Abmessungen durch ein Aerosil/Flüssigstickstoff-Gemisch.

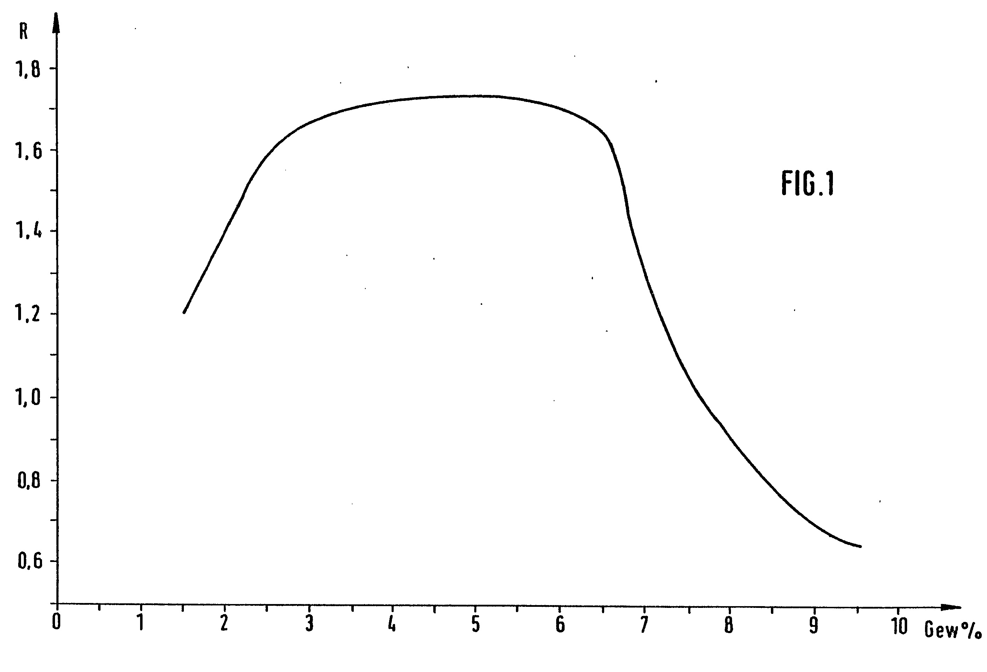

Figur 1 zeigt die spezifische Verdampfungsrate R als Verhältnis der Verdampfungsraten von flüssigem Stickstoff mit einer Beimischung von Aerosil 200 zu flüssigem Stickstoff ohne Beimischung in Abhängigkeit vom Gehalt an Aerosil 200 in Gew % in der Mischung. Es zeigt sich, daß im Bereich zwischen 3 und 6 Gew % Aerosil die maximale Verdampfungsrate erreicht wird. sie liegt um den Faktor 1,7 über derjenigen für flüssigen Stickstoff ohne Zusatz.

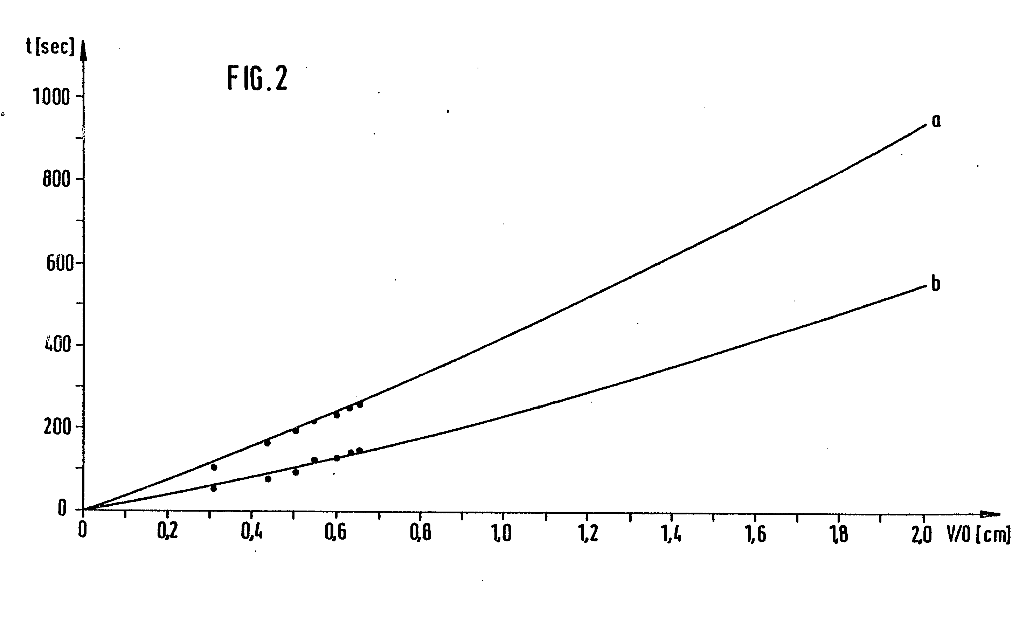

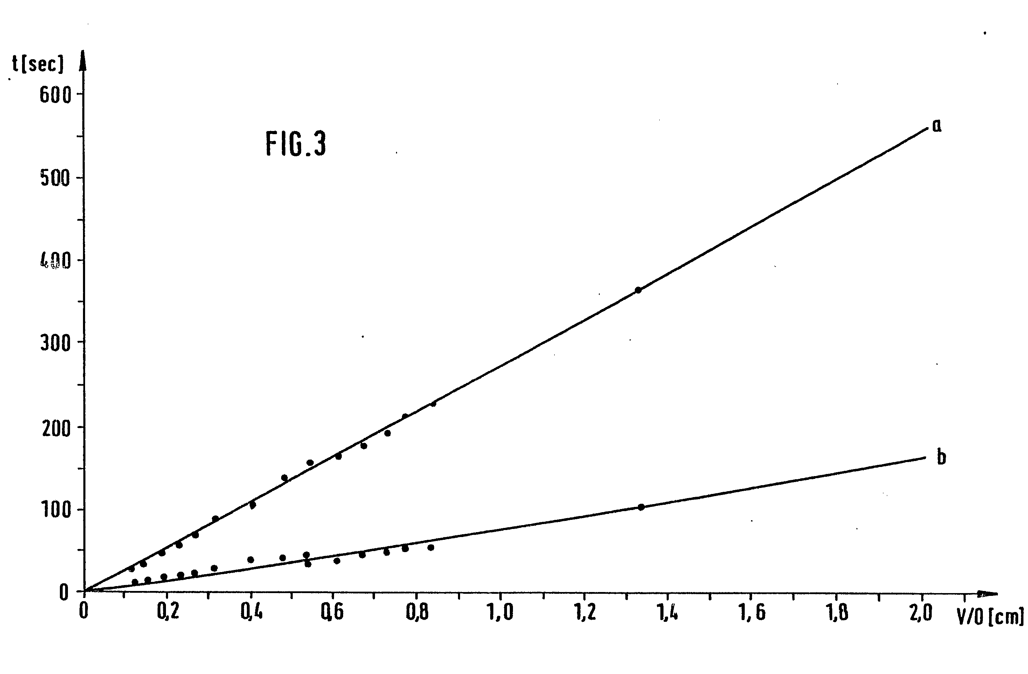

Dieser Effekt wird auch durch die in den Fig. 2 und 3 dargestellten Ergebnisse aus Abkühlversuchen mit Zeitmessung bestätigt. Fig. 2 zeigt die Abhängigkeit der Abkühlzeiten von VA-Stahlkörpern aus zylindrischem Vollmaterial von den Abmessungen der Körper. Als Charakteristikum für die Abmessungen der Körper wurde der Quotient V/O (Volumen/Oberfläche) aufgetragen, da sowohl das Experiment als auch die Rechnung eine weitgehende Proportionalität dieser Größe mit der Abkühlzeit t zeigen. Die Kurve a gibt die errechneten Werte für die Abkühlzeiten in flüssigen Stickstoff an, die Kurve b die errechneten Werte für die Abkühlzeiten in flüssigem Stickstoff mit 5 Gew % Zusatz an Aerosil 200. Die Punkte geben die in den Experimenten gewonnenen Werte an.

Als Abkühlzeit wurde die Zeit zwischen Beginn des Kühlvorganges und dem Ende des Siedevorganges (erkennbar durch plötzlich verminderte Gasentwicklung) aufgetragen.

Sowohl die Versuchsergebnisse als auch die Modellrechnungen ergeben für die Kühlung mit flüssigem Stickstoff eine mittlere Wärmeübergangszahl von 350 kcal/m$^2$ h. Beim Abkühlen der gleichen Teile in flüssigem Stickstoff mit Aerosilzusatz ergeben sich dagegen Kühlzeiten vom ca. 0,51-fachen derjenigen ohne Aerosilzusatz. Dies entspricht einem Wärmeübergangswert von etwa 700 kcal/m$^2$ h.

Messungen an größeren Teilen, z. B. Körpern aus 9,3 kg VA-Stahl stimmen mit der rechnerischen Extrapolation der Kurve nach größeren V/O-Werten gut überein. Die relative Kühldauer liegt hier mit 0,59 etwas höher.

Die Zeitmessungen in Fig. 2 für große Teile aus VA-Stahl sind mit einer gewissen Ungenauigkeit behaftet, da die Gasentwicklung am Ende des Siedevorganges nicht plötzlich abbricht, sondern nur langsam abnimmt.

Das Diagramm gemäß Fig. 3 entspricht in allem dem von Fig. 2 und zeigt die Verhältnisse für die Abkühlung von Körpern aus Aluminium. Als Wärmeübergangswerte ergeben sich 350 kcal/m$^2$ h, bzw. 1 300 kcal/m$^2$ h. Dieser Wert bestätigt sich auch für größere Teile, beispielsweise 1,32 kg Aluminium.

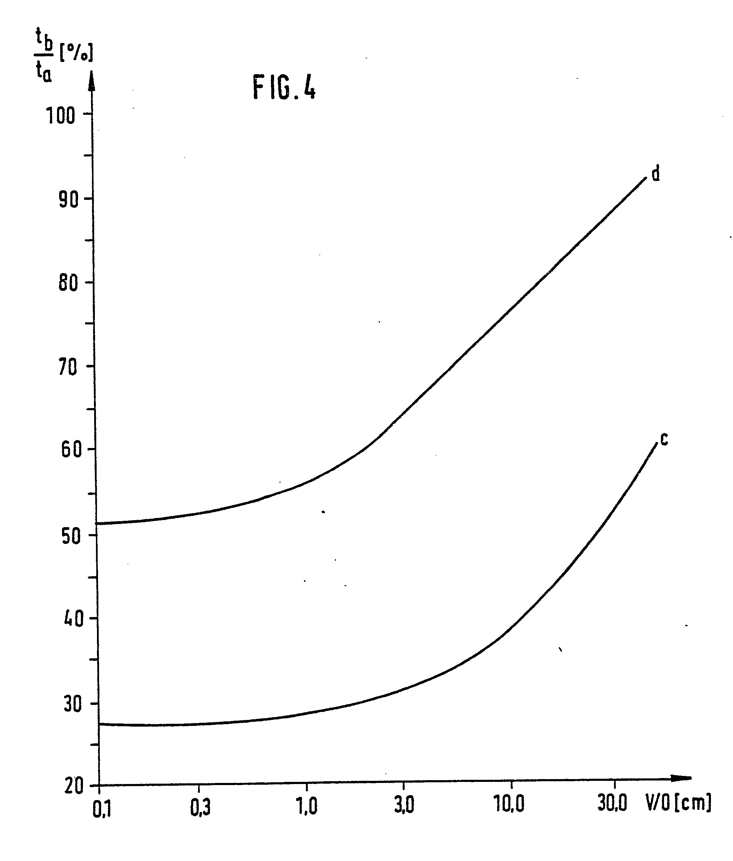

Mit den auf diese Weise ermittelten Wärmeübergangswerten läßt sich der Zeitbedarf zum Abkühlen auch für größere Teile extrapolieren, wie in Fig. 4 dargestellt. Darin ist das Verhältnis der Abkühlzeiten $t_b/t_a$ mit und ohne Aerosilzusatz über dem Verhältnis Volumen zu Oberfläche dargestellt. Die Kurve c gibt die Werte für Aluminium, die Kurve d gibt die Werte für VA-Stahl an. Die relative Zeitersparnis wird mit zunehmender Werkstückgröße geringer, da die begrenzte Wärmeleitfähigkeit im Innern der Körper trotz des besseren Wärmeübergangs an der Oberfläche den Temperaturausgleich im Material selbst limitiert. Für Werkstücke gängiger Größe wird die Abkühlzeit aber auf jeden Fall erheblich reduziert.

Das Gemisch aus flüssigem Stickstoff und Aerosil 200 haftet zwar an Metalloberflächen lose an, so daß nach dem Einkühlen ein möglicherweise störender Feststoffanteil zurückbleibt. Mit flüssigem Stickstoff läßt sich dieser Rückstand jedoch leicht abspülen, so daß Probleme für nachfolgende Fertigungsschritte nicht bestehen. Gelegentlich kann ein pulverförmiger Feststoffbelag sogar erwünscht sein, beispielsweise zur Verbesserung der Gleiteigenschaften der Werkstücke. In vielen derartigen Fällen eignet sich Kunststoffstaub als Feststoffzusatz zum flüssigen Stickstoff gut.

### Patentansprüche

1. Verfahren zum Abkühlen von Werkstücken durch direkten Wärmeaustausch mit einem tiefsiedenden verflüssigten Gas, dadurch gekennzeichnet, daß dem tiefsiedenden verflüssigten Gas sich nicht verflüchtigende Feststoffe in Form mikroskopischer Partikel zugemischt werden, die aufgrund ihres spezifischen Gewichtes im verflüssigten Gas schweben oder zumindest durch die Turbulenzen im siedenden Gas in der Schwebe gehalten werden.

2. Verfahren nach Anspruch 1, dadurch gekennzeichnet, daß Stickstoff als tiefsiedendem verflüssigten Gas Silicagel zugemischt wird.

### Claims

1. Procedure for cooling of work pieces by means of direct heat exchange with a low-boiling liquefied gas, characterized thereby, mixing solid matter in the form of microscopic particles with the lowboiling liquefied gas, which due to their specific weight are suspended in the liquefied gas or at least are suspended by the turbulence in the boiling gas.

2. Procedure according to claim 1, characterized thereby, that silica gel is mixed to nitrogen used as-low boiling liquefied gas.

### Revendications

1. Procédé pour refroidir des pièces d'œuvre par échange thermique direct avec un gaz liquéfié à bas point d'ébullition, procédé caractérisé en ce qu'on mélange au gaz liquéfié à bas point d'ébullition des substances solides non volatiles sous la forme de particules microscopiques, qui, du fait de leur poids spécifique, sont en suspension dans le gaz liquéfié ou qui, tout au moins, sont maintenues en suspension par les turbulences dans le gaz en ébullition.

2. Procédé selon la revendication 1, caractérisé en ce qu'on ajoute du silicagel à l'azote constituant le gaz liquéfié à bas point d'ébullition.

FIG.1

0 081 645

FIG. 2

0 081 645

FIG.3

0 081 645

FIG.4